# EUROPÄISCHE PATENTSCHRIFT

(11) **EP 0 849 075 B1**
(45) Veröffentlichungstag und Bekanntmachung des Hinweises auf die Patenterteilung: **17.11.2010**
(21) Anmeldenummer: 97121494.5
(22) Anmeldetag: 06.12.1997
(51) Int. Cl.: B32B 27/36, B65D 65/40

(54) **Siegelfähige biaxial orientierte Polyesterfolie, Verfahren zu ihrer Herstellung und ihre Verwendung**
Biaxially oriented sealable polyester film, method for producing the same and its use
Film de polyester scellable, orientée biaxialement, son procédé de fabrication et son utilisation

(30) Priorität: 20.12.1996 DE 19653750
(43) Veröffentlichungstag der Anmeldung: 24.06.1998
(73) Patentinhaber: Mitsubishi Polyester Film GmbH, 65203 Wiesbaden (DE)
(72) Erfinder: Peiffer, Herbert, 55126 Mainz (DE); Bennett, Cynthia, 55232 Alzey (DE); Roth, Werner, 65817 Eppstein (DE); Fritsch, Karsten, 86830 Schwabmünchen (DE)
(74) Vertreter: Zounek, Nikolai

(56) Entgegenhaltungen:
- EP-A- 0 368 278
- EP-A- 0 678 554
- EP-A- 0 785 067
- US-A- 4 011 358

## Beschreibung

Die Erfindung betrifft eine transparente siegelfähige biaxial orientierte Polyesterfolie mit mindestens einer Siegelschicht aus Copolyester, der Ethylen-2,6-naphthalat-Einheiten enthält, ein Verfahren zu ihrer Herstellung und ihre Verwendung.

Biaxial orientierte Polyesterfolien gelangen aufgrund ihrer vorteilhaften physikalischen Eigenschaften in vielfältige Anwendungen, z.B. als Träger für Magnetbänder oder als Dielektrikum für Kondensatoren. Aufgrund ihrer guten Barrierewirkung gegenüber Sauerstoff und ihrer guten optischen Eigenschaften eignen sich Polyesterfolien als Verpackungsmaterial. Für viele der Verpackungsanwendungen ist es wünschenswert, wenn die Folien heißsiegelfähig sind und bereits bei niedriger Siegeltemperatur eine hohe Siegelnahtfestigkeit aufweisen. Von solchen Folien wird weiterhin verlangt, daß sie ohne nennenswerte Probleme wirtschaftlich herstellbar und gut weiterverarbeitbar sind.

Nach dem Stand der Technik werden für die Siegelschichten von siegelfähigen Polyesterfolien Materialien verwendet, die entweder
- kristallin bzw. teilkristallin sind und einen niedrigen Schmelzpunkt aufweisen (z.B. Polyethylen, Propylenhomopolymeres oder Copolymere aus Ethylen und Propylen) oder
- amorph sind und eine mittels DSC gemessenen Glasübergangstemperatur T_{g} haben, die niedriger ist als die der dazugehörigen Basisschicht.

Polyesterfolien, die nach der zuerst genannten Methode hergestellt werden, weisen den Vorteil einer niedrigen Siegeltemperatur auf. Die minimale Siegeltemperatur (auch Siegelanspringtemperatur oder Mindestsiegeltemperatur genannt) solcher Folien beträgt ca. 100 °C, wodurch sich diese Folien hervorragend für die Verarbeitung auf schnellaufenden Verpackungsmaschinen eignen. Nachteilig an diesen Folien ist jedoch, daß die Siegelschichten/-folien durch Laminierung mittels Haftvermittler auf die Polyesterfolie aufgebracht werden müssen. Dieser zusätzliche Verarbeitungsschritt führt zu höheren Kosten und kann unter Umständen unwirtschaftlich sein. Außerdem sind solche Verbunde in der Optik verbesserungsbedürftig. Von weiterem Nachteil ist, daß in der Regel das Polyethylen der Siegelschicht Gleitmittel wie Erucasäureamid enthält. Das Erucasäureamid kann beim Aufwickeln der Folie auf die gegenüberliegende Oberfläche der Polyesterfolie übertragen werden ("abklatschen") und damit diese Seite für eine spätere Metallisierung ungeeignet machen.

Bei siegelfähigen Polyesterfolien, die nach der zweiten Methode hergestellt werden, können die amorphen Siegelschichten mittels koextrusion auf die Basisschicht aus Polyester aufgebracht werden. Im Vergleich zur Laminierung stellt diese Methode die wirtschaftlichere Lösung dar. Die amorphen siegelfähigen Coextrusionsschichten bestehen in der Regel aus isophthalsäurehaltigen und terephthalsäurehaltigen Copolyestern, wie sie beispielsweise in der GB-A 1 465 973 oder in der EP-A 0 035 835 beschrieben werden.

In der GB-A 1 465 973 wird eine coextrudierte zweischichtige Polyesterfolie beschrieben, deren eine Schicht aus isophthalsäurehaltigen und terephthalsäurehaltigen Copolyestern besteht und deren andere Schicht aus Polyethylenterephthalat besteht. Über das Siegelverhalten der Folie finden sich in der Schrift keine verwertbaren Angaben. Wegen fehlender Pigmentierung ist die Folie nicht prozeßsicher herstellbar (Folie ist nicht wickelbar) und nur unter Einschränkung weiterverarbeitbar.

In der EP-A 0 035 835 wird eine coextrudierte siegelfähige Polyesterfolie beschrieben, der zur Verbesserung des Wickel- und des Verarbeitungsverhaltens in der Siegelschicht Partikel zugesetzt werden, deren mittlere Teilchengröße die Schichtdicke der Siegelschicht übersteigt. Durch die teilchenförmigen Zusatzstoffen werden Oberflächenvorsprünge gebildet, die das unerwünschte Blocken und Kleben an Walzen oder Führungen verhindern. Durch Wahl von Partikeln mit größerem Durchmesser als die Siegelschicht wird das Siegelverhalten verschlechtert. Angaben zum Siegeltemperaturbereich der Folie werden in der Schrift nicht gemacht. Die Siegelnahtfestigkeit wird bei 140 °C gemessen und liegt in einem Bereich von 85 bis 120 N/m (1,275 N/15 mm bis 1,8 N/15 mm Folienbreite).

In der EP 0 432 886 wird eine coextrudierte mehrschichtige Polyesterfolie beschrieben, die eine erste Oberfläche besitzt, auf der eine siegelfähige Schicht angeordnet ist und eine zweite Oberfläche besitzt, auf der eine Acrylatschicht angeordnet ist. Die siegelfähigen Deckschichten können auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegeltemperaturbereich der Folie werden in der Schrift nicht gemacht. Die Siegelnahtfestigkeit wird bei 140 °C gemessen. Für eine 11 µm dicke Siegelschicht wird eine Siegelnahtfestigkeit von 761,5 N/m (11,4 N/15 mm) angegeben.

In der EP 0 515 096 wird eine coextrudierte mehrschichtige siegelfähige Polyesterfolie beschrieben, die auf der siegelfähigen Schicht ein zusätzliches Additiv enthält. Das Additiv kann z.B. anorganische Partikel enthalten und wird vorzugsweise in einer wäßrigen Schicht an die Folie bei deren Herstellung angetragen. Hierdurch soll die Folie die guten Siegeleigenschaften beibehalten und gut zu verarbeiten sein. Angaben zum Siegeltemperaturbereich der Folie werden in der Schrift nicht gemacht. Die Siegelnahtfestigkeit wird bei 140 °C gemessen und beträgt mehr als 200 N/m (3 N/15 mm). Für eine 3 µm dicke Siegelschicht wird eine Siegelnahtfestigkeit von 275 N/m (4,125 N/15 mm) angegeben.

In einem Datenblatt über Melinex® 850 (ICI), eine copolyesterbeschichtete Polyesterfolie, wird für diese Folie ein Siegeltemperaturbereich von 120 bis 200 °C angegeben, wobei die Siegelnahtfestigkeit 4,8 N/15 mm (gemessen bei einer Siegeltemperatur von 140 °C, einem Siegeldruck von 2,8 bar und einer Siegelzeit von 2 sec) beträgt. Nachteilig an dieser Folie ist ihre relativ hohe Siegeltemperatur und ihre niedrige Siegelnahtfestigkeit, insbesondere bei Anwendung kurzer Siegelzeiten und kleiner Siegeldrucke.

Gegenüber nichtsiegelfähigen Polyesterfolien sind bei siegelfähigen Polyesterfolien u.a. die optischen Eigenschaften und die Schlupfeigenschaften, insbesondere bei höherer Temperatur, verschlechtert.

EP 785 067 offenbart eine mehrschichtige, nicht biaxial gerechte Polyesterfolie, deren Außenlage eine blasstemperatur T_{g} von 5k niedrigen als die der innenliegenden schicht aufweist

Deutlich verschlechtert gegenüber nichtsiegelfähigen Polyesterfolien ist die Herstellung und die Verarbeitung von siegelfähigen Polyesterfolien, deren Siegelschichten Copolymere mit einer Glasübergangstemperatur aufweisen, die niedriger ist als diejenige der Basisschicht. Bedingt durch die niedrigere Glasübergangstemperatur neigt die Folie auf der siegelfähigen Oberfläche während der Herstellung und während der Verarbeitung zum Verblocken und Verkleben. Störungen im Herstellungsprozeß und im Verarbeitungsprozeß treten wesentlich häufiger auf als bei einer nichtsiegelfähigen Standardpolyesterfolie. So wird z.B. bei der Folienherstellung im Längsstreckprozeß die amorphe Folie über beheizte Walzen auf eine Temperatur aufgeheizt, die etwas höher ist als die Glasübergangstemperatur der Basisschicht. Bei dieser Temperatur ist die Siegelschicht, die eine niedrigere Glasübergangstemperatur aufweist als die der Basisschicht, bereits klebrig. In der Längsstreckung kommt es hierdurch bei siegelfähigen Polyesterfolien vermehrt zu Folienabrissen, bzw. zu einem völligen Erliegen der Produktion. Das Verfahren, bei dem die oben beschriebene Folienrohstoffe eingesetzt werden, ist daher nur bedingt prozeßfähig. Ähnlich ist es beim Bedrucken oder bei der Metallisierung der Folie. Bei beiden Verarbeitungsmethoden erwärmt sich die Folie, wodurch die Tendenz zum Verkleben der Folie z.B. an Umlenkwalzen oder bei der Wickelung drastisch zunimmt.

Es ist bekannt, daß Copolymere aus Polyethylenterephthalat und Polyethylen-2,6-naphthalat im Bereich von ca. 15 bis 85 Gew.-% Polyethylen-2,6-naphthalat am Gesamtanteil der Mischung eine amorphe Phase bilden (**Plastics Technology**, May 1995). Hinweise, daß diese amorphen Copolymere für die Herstellung von siegelfähigen Polyesterfolien, insbesondere für die Herstellung von siegelfähigen Polyesterfolien mit geringer Siegelanspringtemperatur genutzt werden können, sind dieser Schrift nicht zu entnehmen. Ein Fachmann würde nicht erwarten, daß solche Copolymere zu siegelfähigen Polyesterfolien führen, da die Glasübergangstemperatur T_{g} dieser Copolymere größer ist als diejenige der PET-Basisschicht. Dieser Sachverhalt würde den Fachmann eher davon abhalten, solche Polymere für die Herstellung von siegelfähigen Folien zu verwenden.

Aufgabe der vorliegenden Erfindung war es, eine siegelfähige biaxial orientierte Polyesterfolie bereitzustellen, die die Nachteile der genannten Folien nach dem Stand der Technik nicht mehr aufweisen und sich insbesondere durch eine gute Herstellbarkeit und Weiterverarbeitbarkeit, aber auch durch eine sehr gute Siegelfähigkeit auszeichnen. Insbesondere war es ein Anliegen der Erfindung, die Klebeneigung siegelfähiger Polyesterfolien bei der Herstellung und bei der Weiterverarbeitung deutlich zu reduzieren, beziehungsweise zu vermeiden. Gegenüber siegelfähigen Folien nach dem Stand der Technik sollen daneben auch ihre optischen Eigenschaften verbessert werden. Die Folien sollen fertigungstechnisch günstiger als bisher zu produzieren sein. Bei der Herstellung der Folien soll weiterhin gewährleistet sein, daß das Regenerat (d.h., der bei der Herstellung anfallende Folienverschnitt) in einer Konzentration von 10 bis 50 Gew.-%, bezogen auf das Gesamtgewicht der Folie, wieder der Extrusion zugeführt werden kann, ohne daß dabei ihre vorteilhaften Eigenschaften nennenswert negativ beeinflußt werden.

Solche Folien würden sich hervorragend für den Einsatz bei Verpackungsanwendungen eignen, insbesondere dort, wo die Folien bei niedriger Siegeltemperatur auf schnellaufenden Verpackungsmaschinen eingesetzt werden.

Die Aufgabe wird erfindungsgemäß durch die Bereitstellung einer coextrudierten, biaxial orientierten, siegelfähigen Polyesterfolie mit mindestens einer Basis- und mindestens einer siegelfähigen Deckschicht gelöst, deren kennzeichnendes Merkmal darin besteht, daß die siegelfähige/n Deckschicht/en ein Copolymeres ist/sind, welches/e 5 bis 95 Gew.-% Ethylen-2,6-naphthalat-Einheiten enthält/enthalten.

Die Aufgabe kann weiterhin durch die Bereitstellung eines Verfahrens ("Direktextrusion der Deckschicht") für die Herstellung der erfindungsgemäßen Folie gelöst werden. Hierbei werden die Granulate aus Polyethylenterephthalat und Polyethylen-2,6-naphthalat in dem gewünschten Mischungsverhältnis direkt dem Extruder für die Siegelschicht (A) der Folie zugeführt. Die beiden Materialien werden bei etwa 300 °C und bei einer Extruderverweilzeit von ca. 5 min. extrudiert. Die Schmelze wird filtriert und in einer Mehrschichtdüse zu einem flachen Schmelzefilm ausgeformt und der Basischicht (B) überlagert. Der Mehrschichtfilm (Schichtreihenfolge beispielsweise A-B oder A-B-A) wird über die Düsenlippe ausgestoßen und auf einer Kühlwalze verfestigt. Die weiteren Verarbeitungsschritte sind wie weiter unten angegeben. Das Copolymere bildet sich im Extruder bei den angegebenen Bedingungen.

Von großem Vorteil ist hierbei, daß dem Extruder Granulate zugegeben werden, die kristallin sind und daher nicht an den Wänden kleben.

Erfindungsgemäß ist die Folie zumindest zweischichtig und umfaßt dann als Schichten eine Basisschicht B und die erfindungsgemäße siegelfähige Deckschicht A. In einer bevorzugten Ausführungsform weist die Folie auf ihrer Basisschicht B beidseitige erfindungsgemäße siegelfähige Deckschichten A auf.

Die Basisschicht der Folie besteht aus einem thermoplastischen Polyester, insbesondere aus einem solchen, der zum überwiegenden Teil, d.h. zu mindestens 90 Gew.-%, aus Polyethylenterephthalat (PET), besteht. Bevorzugt sind Polyester, die vorzugsweise im wesentlichen aus Ethylenterephthalat- oder Ethylen-2,6-naphthalat-Einheiten und/oder bis zu 10 Mol-%, vorzugsweise bis zu 5 Mol-% aus Comonomer-Einheiten aufgebaut sind, wobei eine Variation in der Glykol- und/oder der Dicarbonsäure-Komponente der Comonomer-Einheiten möglich ist. Als Glykol-Comonomer können zweiwertige Diole wie zum Beispiel Diethylenglykol, Triethylenglykol, aliphatische Glykole der allgemeinen Formel HO-(CH₂)ₙ-OH, wobei n=3-6, verzweigte aliphatische Glykole mit bis zu 6 Kohlenstoff-Atome, sowie aromatische Glykole der allgemeinen Formeln 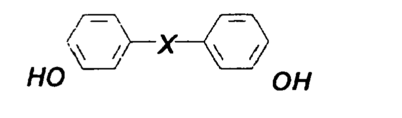 wobei X= -CH₂-, C(CH₃)₂-, -O-, -C(CF₃)₂-, -S-, -SO₂-
und 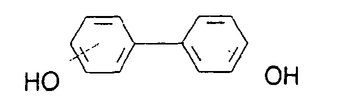 eingesetzt werden. Als Dicarbonsäure-Comonomer können Dicarbonsäuren sowie die davon abgeleiteten Ester eingesetzt werden. Beispielsweise können Dicarbonsäuren der folgenden Formeln eingesetzt werden: 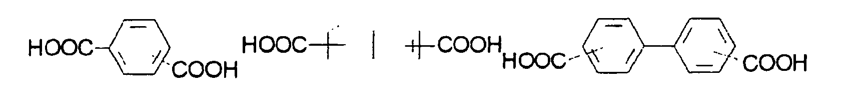 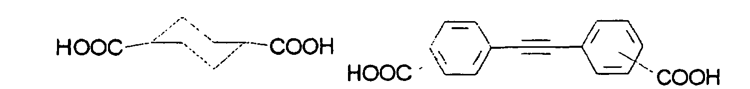 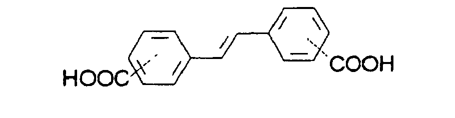 sowie C₁₋₆-alkyldicarbonsäuren.

Die Herstellung der Polyester kann sowohl ausgehend von den Dicarbonsäureester nach dem Umesterungsverfahren mit den üblichen Umesterungskatalysatoren, wie z.B. Zn-, Ca-, Li- und Mn-Salzen, mit anschließender Stabilisierung und Polykondensation mit üblichen Polykondensationskatalysatoren wie Antimontrioxid oder organische Titan-Alkoholate bzw. -Carboxylate oder ausgehend von den Dicarbonsäuren nach dem Direktveresterungsverfahren unter Verwendung von üblichen Polykondensationskatalysatoren (beispielsweise Antimontrioxid oder organische Titanverbindungen des Typs Alkoholat bzw. Carboxylat, die gegebenenfalls auch andere Kationen enthalten) erfolgen.

Die siegelfähigen Deckschichten der erfindungsgemäßen Folie bestehen aus Copolymeren, die Ethylen-2,6-naphthalat-Einheiten und Ethylen-terephthalat-Einheiten enthalten. Bis zu 10 Mol-% der Copolymere können aus weiteren Comonomeren, wie oben für die Polyester der Basisschicht angegeben, bestehen. Das Gewichtsverhältnis der Ethylen-2,6-napththalat-Einheiten zu den Ethylenterephthalat-Einheiten beträgt 5/95 bis 95/5, vorzugsweise 10/90 bis 90/10, ganz besonders bevorzugt 15/85 bis 85/15.

Für die Verarbeitung der Polymere hat es sich als günstig erwiesen, wenn die Schmelzen für die Deckschicht/en und die Basischicht in den Viskositäten nicht zu weit auseinanderliegen. Liegen sie zu weit auseinander, ist mit Fließstörungen oder Streifenbildung auf der fertigen Folie zu rechnen. Für die Beschreibung der Viskositäsbereiche der beiden Schmelzen wird eine modifizierte Lösungsmittelviskosität (SV-Wert oder solution viscosity) verwendet. Für handelsübliche Polyethylenterephthalate (PET), die zu biaxial orientierten Folien verarbeitet werden und die erfindungsgemäß als Basisfolienmaterial verwendet werden, liegen die SV-Werte im Bereich von 600 bis 1000. Um eine einwandfreie Qualität der erfindungsgemäßen siegelfähigen Folie zu gewährleisten sollte der SV-Wert der Copolymere im Bereich von 500 bis 1200 liegen. Sofern erforderlich, kann an den jeweiligen Granulaten eine Festphasenkondensation durchgeführt werden, um die jeweiligen SV-Werte der Materialien aufeinander einzustellen.

Die Deckschichtmaterialien können auf 3 verschiedene Weisen hergestellt werden:

### a) gemeinsame Polykondensation

In der gemeinsamen Polykondensation werden die Terephthalat- und die Naphthalat-Monomere gemeinsam mit Glykol in einem Reaktionskessel vorgelegt und unter Verwendung der üblichen Katalysatoren und Stabilisatoren zu einem Polyester polykondensiert. Erwartungsgemäß werden die Terephthalat und Naphthalat-Einheiten in dem Polyester nach diesem Verfahren statistisch verteilt sein.

### b) Vormischung der Schmelze

PET- und PEN-Homopolymere werden im gewünschten Verhältnis gemeinsam aufgeschmolzen und gemischt. Dies kann entweder im einem Reaktionskessel oder vorzugsweise in einem Schmelzekneter (z.B. einem Zweischneckenkneter) oder Extruder erfolgen. Sofort nach dem Aufschmelzen beginnen Umesterungsreaktionen zwischen den Polyestern. Zunächst erhält man Blockcopolymere, aber mit zunehmender Reaktionszeit -abhängig von der Temperatur und Mischwirkung des Rührelementswerden die Blöcke kleiner und bei langer Reaktionszeit erhält man ein statistisches Copolymeres. Allerdings ist es nicht nötig und auch nicht unbedingt vorteilhaft zu warten, bis sich eine statistische Verteilung eingestellt hat, denn die gewünschten Eigenschaften werden auch mit einem Blockcopolymeren erhalten. Anschließend wird das erhaltene Copolymere aus einer Düse herausgepreßt und granuliert.

### c) Direktextrusion

Die PET- und PEN-Homopolymere werden als Granulat im gewünschten Verhältnis gemischt und so dem Deckschichtextruder zugeführt. Hier findet die Umesterung zum Copolymeren direkt während die Herstellung der Folie statt. Dieses Verfahren hat den Vorteil, daß es sehr wirtschaftlich ist. In der Regel werden mit diesem Verfahren Blockcopolymere erwartet, wobei die Blocklänge von der Extrusionstemperatur, der Mischwirkung des Extruders und der Verweilzeit in der Schmelze abhängt.

In einer bevorzugten Ausgestaltung der Erfindung enthält die Basisschicht 0,1 bis 15 Gew.-% der Copolymere der Deckschichten. Diese werden der Basisschicht entweder direkt bei der Extrusion beigemischt oder sind automatisch in der Folie durch Regeneratzugabe enthalten. Der Anteil dieser Copolymere in der Basischicht ist so gewählt, daß die Basischicht kristallinen Charakter aufweist.

Es war überraschend, daß durch die Verwendung von Copolymeren aus PET und PEN eine siegelfähige Deckschicht mit einer Siegelanspringtemperatur von unterhalb 120 °C erzielt werden konnte. Überraschend, weil die Glasübergangstemperatur T_{g} für das Copolymere der Siegetschicht/en im Vergleich zum Stand der Technik höher liegt als die Glasübergangstemperatur T_{g} für die Basisschicht (vgl. z. B. **Plastics Technology,** May 1995). Die Glasübergangstemperatur des erfindungsgemäß eingesetzten Copolymeren für die Siegelschicht liegt im Bereich zwischen 80 und 100 °C, während bei Siegelschichten nach dem Stand der Technik die Glasübergangstemperatur teilweise weit unterhalb der Glasübergangstemperatur T_{g} der Basisschicht liegt (T_{g} der Basisschicht: ca. 80 °C).

Glasübergänge, die beim ersten Aufheizvorgang an biaxial orientierten, wärmefixierten Folien gemessen werden (im folgenden T_{g}1 genannt), sind durch die Kristallinität sowie die molekularen Spannungen im amorphen Anteil der Proben in ihrem Ausmaß relativ gering, über einen breiten Temperaturbereich verteilt und zu höheren Temperaturen verschoben. Vor allem aufgrund von Orientierungseffekten sollten sie nicht herangezogen werden, um die Eigenschaften eines bestimmten Polymers zu charakterisieren. Die Auflösung von DSC-Meßgeräten reicht oft nicht aus, die wegen der Orientierung und Kristallinität kleine und "verschmierte" Glasstufe im ersten Aufheizvorgang (T_{g}1) der einzelnen Schichten einer coextrudierten Folien aufzutrennen. Wenn die Proben hingegen aufgeschmolzen werden und dann unter ihre Glasübergangstemperatur rasch abgeschreckt werden, werden die Effekte der Orientierung eliminiert und es werden dann beim erneuten Aufheizen Glasübergänge gemessen (T_{g}2), die eine höhere Intensität haben und charakteristisch für die eingesetzten Polymere sind. Aber auch bei dieser Methode ist es eher unwahrscheinlich, daß die Glasübergänge der einzelnen Schichten aufgetrennt werden, weil sich während des Aufschmelzens die coextrudierten Schichten vermischen und untereinander umestern. Es ist jedoch völlig ausreichend, die Glasübergänge T_{g}2 der gesamten coextrudierten Folien mit dem Glasübergäng T_{g}2 des Polymeres, daß für die Basisschicht verwendet wurde, zu vergleichen. Ist der T_{g}2-Wert der coextrudierten Folie niedriger als der der Basisschicht, ist die Glasübergangstemperatur der Deckschicht auch niedriger als die der Basisschicht. Ist der T_{g}2-Wert der coextrudierten Folie höher als der der Basisschicht, ist auch die Glasübergangstemperatur der Deckschicht höher als die der Basisschicht.

Die Basisschicht und die Deckschicht/en können, sofern erforderlich, zusätzlich übliche Additive wie Stabilisatoren und Antiblockmittel in üblichen Mengen enthalten. Als Stabilisator werden beispielsweise Phosphorverbindungen wie Phosphorsäure oder verschiedene Phosphorsäureester eingesetzt.

Typische Antiblockmittel sind beispielsweise anorganische und/oder organische Partikel aus Calciumcarbonat, amorphe Kieselsäuren, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Ca-, Ba, Zn- oder Mn-Salze der eingesetzten Dicarbonsäuren, Ruß, Titandioxid, Kaolin, vernetzte Polystyrol- oder Arcrylat-Partikel. Die Partikel können auch Mischungen von zwei oder mehreren der genannten Partikelarten sein oder aber auch Mischungen von gleicher Partikelart aber unterschiedlichen Partikelgröße. Die Partikel werden den einzelnen Schichten in den üblichen Konzentrationen z.B. als glykolische Dispersion während der Polykondensation oder über Masterbatche bei der Extrusion beigegeben. Übliche Pigmentkonzentrationen sind 0,0001 bis 5 Gew.-%.

Zur Einstellung weiterer gewünschter Eigenschaften kann die Folie beschichtet oder mittels Corona, Plasma oder Flamme behandelt werden. Typische Beschichtungen sind haftvermittelnde, antistatisch wirkende, schlupfverbessernde oder dehäsiv wirkende Schichten. Es bietet sich an, diese zusätzliche Schichten über Inline-Coating beispielsweise mittels wäßriger Dispersionen vor dem Streckschritt in Querrichtung auf die Folie aufzubringen.

Die erfindungsgemäße Folie umfaßt mindestens die vorstehend beschriebene Basisschicht und mindestens eine siegelfähige Deckschicht. Je nach ihrem vorgesehenen Verwendungszweck kann die Folie eine weitere Deckschicht auf der gegenüberliegenden Seite aufweisen. Gegebenenfalls kann/können auch einseitig eine oder beidseitig Zwischenschicht/en zwischen der Basis- und der/den Deckschicht/en aufgebracht werden.

Bevorzugte Ausführungsformen der erfindungsgemäßen Polyesterfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist im allgemeinen größer als 0,1 µm und liegt vorzugsweise im Bereich von 0,2 bis 3 µm, insbesondere 0,3 bis 2,5 µm, wobei die Deckschichten gleich oder verschieden dick sein können.

Die Zwischenschicht/en kann/können aus den für die Basisschicht beschriebenen Polymeren bestehen. In einer besonders bevorzugten Ausführungsform besteht/bestehen die Zwischenschicht/en aus dem für die Basisschicht beschriebenen Polyesterrohstoffen. Die Zwischenschicht/en kann/können die für die einzelnen Schichten beschriebenen üblichen Additive enthalten.

Die Dicke der Zwischenschicht/en ist im allgemeinen größer als 0,3 µm und liegt vorzugsweise im Bereich von 0,5 bis 15 µm, insbesondere 1,0 bis 10 µm.

Die Gesamtdicke der erfindungsgemäßen Polyesterfolie kann innerhalb weiter Grenzen variieren und richtet sich nach dem beabsichtigten Einsatz. Sie beträgt vorzugsweise 4 bis 100 µm, insbesondere 5 bis 50 µm, vorzugsweise 6 bis 30 µm, wobei die Basisschicht etwa 40 bis 100 % der Gesamtfoliendicke ausmacht.

Die Erfindung betrifft weiterhin ein Verfahren zur Herstellung der erfindungsgemäßen Polyesterfolie.

Im Rahmen dieses Verfahrens wird so vorgegangen, daß die Schicht oder die den einzelnen Schichten der Folie entsprechende/n Schmelze/n durch eine Flachdüse coextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckverhältnisse liegen im Bereich von 2,5 bis 6, vorzugsweise 3 bis 5,5. Die Querstreckverhältnisse liegen im Bereich von 3,0 bis 5,0 vorzugsweise 3,5 bis 4,5.

An die biaxiale Streckung der Folie schließt sich ihre Thermofixierung an, wobei die Folie etwa 0,1 bis 10 s lang bei einer Temperatur von 150 bis 250 °C gehalten wird. Anschließend wird die Folie in üblicher Weise mit einer Aufwickeleinrichtung aufgewickelt.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung bei 80 bis 130 °C und die Querstreckung vorzugsweise bei 90 bis 150 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von über 45 mN/m.

Die erfindungsgemäße Folie zeichnet sich durch eine hervorragende Herstellbarkeit und durch eine hervorragende Weiterverarbeitbarkeit aus. Die Extrusion und insbesondere die Längsstreckung sind aufgrund der verwendeten Materialien prozeßsicher. An den Walzenoberfächen der Längsstreckung kommt es zu keinem Verkleben mit der Folie, wie es bei Folien nach dem Stand der Technik geschehen kann. Weiterhin hat die erfindungsgemäße Folie eine ausgezeichnete Siegelfähigkeit und sehr gute optische Eigenschaften. Insbesondere konnten der Glanz und die Trübung der Folie deutlich verbessert werden. Daneben ist bei der Herstellung der Folie gewährleistet, daß das Regenerat in einer Konzentration von 20 bis 50 Gew.-%, bezogen auf das Gesamtgewicht der Folie, wieder der Extrusion zugeführt werden kann, ohne daß dabei die physikalischen Eigenschaften der Folie nennenswert negativ beeinflußt werden.

Die Folie eignet sich demnach hervorragend für den Einsatz bei Verpackungsanwendungen, insbesondere dort, wo die Folie bei niedriger Siegeltemperatur auf schnellaufenden Verpackungsmaschinen eingesetzt wird.

Darüber hinaus hat sich gezeigt, daß die amorphe Ethylen-2,6-naphthalat-Einheiten enthaltene(n) Schicht(en) bei Temperaturen von größer als 90-100 °C sehr gut prägbar (z.B. mittels Prägewalze) ist (sind). Die erfindungsgemäße Folie eignet sich demzufolge nicht nur für Siegelanwendungen sondern ebenfalls hervorragend für die Übertragung von Prägestrukturen auf die amorphe erfindungsgemäße Schicht. Ein typisches Beispiel hierfür sind holographische Anwendungen, bei denen mittels Prägewalze geometrische Strukturen in die amorphe Schicht eingebracht werden, die nach einer nachfolgenden Metallisierung der Folie zu sehr ansprechenden Dekoren führen.

Zur Charakterisierung der Rohstoffe und der Folien wurden die folgenden Meßwerte benutzt:

### SV-Wert (solution viscosity)

Zur Bestimmung des SV-Wertes wird eine Polyester-Probe in einem Lösungsmittel (Dichloressigsäure) gelöst. Die Viskosität dieser Lösung sowie die Viskosität des reinen Lösungsmittels werden in einem Ubbelohde-Viskosimeter gemessen. Aus den beiden Werten wird der Quotient ermittelt und davon 1,000 abgezogen und dieser Wert mit 1000 multipliziert. Der resultierende Wert ist der SV-Wert ("solution viscosity").

### Bestimmung der Siegelfähigkeit

Die Siegelbacken des Siegelgerätes HSG/ET der Firma Brugger wurden auf 190° C eingestellt. Die Folienproben wurden bei einem Siegeldruck von 10 N/cm² und einer Siegeldauer von 0,5 s gesiegelt. Aus den gesiegelten Proben wurden Prüfstreifen von 15 mm Breite geschnitten. Die T-Siegelnahtfestigkeit, d. h. die zur Trennung der Prüfstreifen erforderliche Kraft, wurde mit einer Zugprüfmaschine bei 200 mm/min Abzugsgeschwindigkeit bestimmt, wobei die Siegelnahtebene einen rechten Winkel mit der Zugrichtung bildet. Die Folien wurden als "siegelfähig" eingestuft, wenn die Siegelnahtfestigkeit mindestens 0,5 N/15 mm betrug.

### Bestimmung der Mindestsiegeltemperatur (Siegelanspringtemperatur)

Mit dem Siegelgerät HSG/ET der Firma Brugger wurden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm² und einer Siegeldauer von 0,5 s gesiegelt wurde. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

### Siegelnahtfestigkeit

Zur Bestimmung wurden zwei 15 mm breite Folienstreifen übereinandergelegt und bei 130 °C, einer Siegelzeit von 0,5 s und einem Siegeldruck von 1,5 N/mm² (Gerät: Brugger Typ NDS, einseitig beheizte Siegelbacke) versiegelt. Die Siegelnahtfestigkeit wurde nach der T-Peel-Methode bestimmt.

### Reibung

Die Reibung wurde nach DIN 53 375 bestimmt. Die Gleitreibungszahl wurde 14 Tage nach der Produktion gemessen.

### Oberflächenspannung

Die Oberflächenspannung wurde mittels der sogenannten Tintenmethode (DIN 53 364) bestimmt.

### Trübung

Die Trübung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und wird mit dem Einstrahlwinkel angegeben.

### Glasübergangstemperaturen T_{g}1 und T_{g}2

Die Folienproben wurden mit Hilfe der DSC (Differential Scanning Calorimetry) untersucht. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang T_{g}1 ermittelt. Die Proben zeigten vielfach eine Enthalpierelaxation (ein Peak) zu Beginn des stufenförmigen Glasübergangs. Als T_{g}1 wurde die Temperatur genommen, bei der die stufenförmige Veränderung der Wärmekapazität-unabhängig von der peakförmigen Enthalpierelaxation-ihre halbe Höhe im ersten Aufheizvorgang erreichte. In allen Fällen wurde nur eine einzige Glasübergangsstufe im Thermogramm beim ersten Aufheizen beobachtet. Um die thermische Vorgeschichte zu eliminieren, wurden die Proben nach dem Aufheizen 5 Minuten bei 300° C gehalten und dann anschließend mittels flüssigem Stickstoff abgeschreckt. Aus dem Thermogramm für das zweite Aufheizen wurde die Temperatur für den Glasübergang T_{g}2 als die Temperatur bei halber Stufenhöhe entnommen.

Die in den Beispielen für die Folienherstellung verwendeten Copolymere können nach den zuvor beschriebenen Verfahren hergestellt werden. Die drei Verfahren werden im folgenden anhand von Beispielen weiter konkretisiert:

### Beispiel 1

Das Copolymere wurde durch gemeinsame Polykondensation hergestellt. Hierbei wurden die Monomere Dimethylterephthalat und 2,6-Dimethylnaphthalindicarboxylat in einem Reaktor im Molverhältnis 1,26: 1,00 (entspricht einer Zusammensetzung von 50 Gew.-% Ethylenterephthalat-Einheiten und 50 Gew.-% Ethylen-2,6-naphthalat-Einheiten im fertigen Copolymeren) gemischt und mit Ethyenglykol und 300 ppm Manganacetat als Katalysator versetzt. Zwischen 160 und 250 Grad Celsius und Atmosphärendruck wurde unter Rühren die Umesterung durchgeführt. Dabei wurde Methanol abdestilliert. Anschließend wurde eine äquimolare Menge phosphorige Säure als Stabilisator und 400 ppm Antimontrioxid als Katalysator zugegeben. Bei 280 Grad Celsius und einem Unterdruck von kleiner 1 mbar wurde unter Rühren die Polykondensation durchgeführt. Anhand des am Rührer gemessenen Drehmoments ließ sich das Molekulargewicht bestimmen und somit einstellen. Die Schmelze wurde nach Ende der Reaktion mit Stickstoff aus dem Reaktor gedrückt und granuliert.

### Beispiel 2

Es wurden handelsübliche Polyethylenterephthalat- und Polyethylen-2,6-naphthalat-Granulate verwendet. Die Granulate wurden jeweils ca. 4 h bei einer Temperatur von ca. 160 °C getrocknet und kristallisiert. Anschließend wurden die beiden Materialien zu jeweils 50 Gew.-% in einen Mischer gegeben und dort mittels Rührer homogenisiert. Die Mischung gelangte anschließend in einen Zweischneckenkompounder (ZSK Fa. Werner und Pfleiderer, Stuttgart) und wurde dort bei einer Temperatur von ca. 300 °C und bei einer Verweilzeit von ca. 3 min extrudiert. Die Schmelze wurde zu Strängen gepreßt und diese zu Chips geschnitten. Das Copolymere entstand bei der Extrusion durch Reaktion zwischen dem Polyethylenterephthalat und Polyethylen-2,6-naphthalat.

### Beispiel 3

In Abänderung von Beispiel 2 wurden hier die beiden Chips aus Polyethylenterephthalat und Polyethylen-2,6-naphthalat in einem Mischungsverhältnis von 1/1 direkt dem Einschneckenextruder für die Folienherstellung zugeführt. Dort wurden die beiden Materialien bei etwa 300 °C extrudiert. Die Schmelze wurde filtriert und in einer Mehrschichtdüse zu einem Flachfilm ausgeformt und als A-Schicht der Basischicht B überlagert. Der Mehrschichtfilm wurde über die Düsenlippe ausgestoßen und auf einer Kühlwalze verfestigt. Die Verweilzeit der beiden Polymere in der Extrusion betrug ca. 5 min. Die weiteren Verarbeitungsschritte waren wie oben angegeben. Auch hier entstand das Copolymere in der Extrusion bei den angegebenen Bedingungen.

### Herstellung von Folien

### Beispiel 4

Chips aus Polyethylenterephthalat wurden bei 160 °C auf eine Restfeuchte von 50 ppm getrocknet und dem Extruder für die Basisschicht A zugeführt.

Daneben wurden Chips aus Polyethylenterephthalat und Polyethylen-2,6-naphthalat (im Gewichtsverhältnis von 1/1) ebenfalls bei 160°C auf eine Restfeuchte von 50 ppm getrocknet und den beiden Extrudern für die Deckschichten B zugeführt. Die Bedingungen im Extruder für die Deckschichten B sind wie in Beispiel 3 angegeben.

Es wurde durch Coextrusion und anschließende stufenweise Orientierung in Längs-und Querrichtung eine transparente dreischichtige Folie mit symmetrischem Aufbau mit einer Gesamtdicke von 12 µm hergestellt. Die Deckschichten hatten eine Dicke von jeweils 1,5 µm.

### A-Basisschicht:

- 95 Gew.-%: Polyethylenterephthalat RT 49 der Firma Hoechst AG mit einem SV- Wert von 800
- 5 Gew.-%: Masterbatch aus 99 Gew.-% Polyethylenterephthalat und 1,0 Gew.-% SiO₂ (Sylobloc 44 H), das eine mittlere Teilchengröße von 4,5 µm hat

### B-Deckschichten:

- 50 Gew.-%: Polyethylen-2,6-naphthalat Polyclear N 100 Prepolymer (Hoechst AG) mit einem SV-Wert von 1000
- 40 Gew.-%: Polyethylenterephthalat RT 49 (Hoechst AG) mit einem SV-Wert von 800
- 10 Gew.-%: Masterbatch aus 99,0 Gew.-% Polyethylenterephthalat und 1,0 Gew.-% SiO₂ (Sylobloc 44 H), das eine mittlere Teilchengröße von 1,0 µm hat
Die Herstellungsbedingungen in den einzelnen Verfahrensschritten waren:

### Extrusion:

| Temperaturen | | | |
|---|---|---|---|
| | A-Schicht: | | 300 °C |
| | B-Schicht: | | 300 °C |
| Temperatur der Abzugswalze: | | | 30°C |
| | Düsenspaltweite: | | 1 mm |
| Temperatur der Abzugswalze: | | 30°C | |
| Längsstreckung: | Temperatur: | | 85 - 135°C |
| | Längsstreckverhältnis: | | 4,0 |
| Querstreckung: | Temperatur: | | 85 - 145°C |
| | Querstreckverhättnis: | | 4,0 |
| Fixierung: | Temperatur: | | 230 °C |

Die Folie war siegelfähig. Die Eigenschaften derart hergestellter Folien sind in Tabelle 2 dargestellt.

### Beispiel 5

Eine coextrudierte Folie wurde nach der Rezeptur von Beispiel 4 hergestellt, jedoch hatten die B-Deckschichten jetzt die folgende Zusammensetzung:
- 70 Gew.-%: Polyethylen-2,6-naphthalat Polyclear N 100 Prepolymer (Hoechst AG) mit einem SV-Wert von 1000
- 20 Gew.-%: Polyethylenterephthalat RT 49 (Hoechst AG) mit einem SV-Wert von 800
- 10 Gew.-%: Masterbatch aus 99,0 Gew.-% Polyethylenterephthalat und 1,0 Gew.-% SiO₂ (Sylobloc 44 H), das eine mittlere Teilchengröße von 1,0 µm hat

Die Herstellung der Folie erfolgte wie in Beispiel 4. Die Folie war siegelfähig.

### Beispiel 6

Eine coextrudierte Folie wurde nach der Rezeptur von Beispiel 4 hergestellt, jedoch hatten die B-Deckschichten jetzt die folgende Zusammensetzung:
- 90 Gew.-%: Polyethylen-2,6-naphthalat Polyclear N 100 Prepolymer (Hoechst AG) mit einem SV-Wert von 1000
- 10 Gew.-%: Masterbatch aus 99,0 Gew.-% Polyethylenterephthalat und 1,0 Gew.-% SiO₂ (Sylobloc 44 H), das eine mittlere Teilchengröße von 1,0 µm hat

Die Herstellung der Folie erfolgte wie in Beispiel 4. Die Folie war siegelfähig.

### Beispiel 7

Analog Beispiel 4 wurde eine coextrudierte Folie hergestellt, wobei jedoch das Copolymere für die Deckschichten nach Beispiel 2 hergestellt wurde. Alle anderen Bedingungen waren wie in Beispiel 4 angegeben.

### Beispiel 8

Analog Beispiel 4 wurde eine coextrudierte Folie hergestellt, wobei jedoch das Copolymere für die Deckschichten nach Beispiel 1 hergestellt wurde. Alle anderen Bedingungen waren wie in Beispiel 4 angegeben.

### Beispiel 9

Analog Beispiel 4 wurde eine coextrudierte Folie hergestellt, wobei jedoch die Foliendicke von 12 auf 19 µm angehoben und gleichzeitig die Siegelschichtdicke von 1,2 auf 2,0 µm vergrößert wurde. Alle anderen Parameter blieben unverändert.

### Beispiel 10

Analog Beispiel 4 wurde eine coextrudierte Folie hergestellt, wobei jedoch durch Koextrusion eine dreischichtige ABC-Folie mit einer Gesamtdicke von 12 µm hergestellt wurde. Die Siegelschicht A hatte dabei eine Dicke von 2 µm und die andere Deckschicht C eine Dicke von ebenfalls 2 µm.

### B-Basisschicht:

- 100 Gew.-%: Polyethylenterephthalat RT 49 (Hoechst AG) mit einem SV-Wert von 800

### A-Deckschicht:

- 50 Gew.-%: Polyethylennaphthalat Polyclear N 100 Prepolymer (Hoechst AG) mit einem SV-Wert von 1000
- 50 Gew.-%: Polyethylenterephthalat RT 49 (Hoechst AG) mit einem SV-Wert von 800

### C-Deckschicht:

- 80 Gew.-%: Polyethylenterephthalat RT 49 (Hoechst AG) mit einem SV-Wert von 800
- 20 Gew.-%: Masterbatch aus 99,0 Gew.-% Polyethylenterephthalat und 1,0 Gew.-% SiO₂ (Sylobloc 44 H), das zu 50 % eine mittlere Teilchengröße von 2,5 µm und zu 50 % eine mittlere Teilchengröße von 1,0 µm hat

Die Verfahrensbedingungen waren für alle Schichten wie in Beispiel 4 gewählt.

### Vergleichsbeispiel 1

Es wurde eine Folie entsprechend Beispiel 10 hergestellt. Für die Siegelschicht A wurde jetzt ein Copolyester aus 82 Gew.-% Ethylenterephthalat und 18 Gew.-% Ethylenisophthalat verwendet.

Die Folie war siegelfähig. Die Folieneigenschaften sind in Tabelle 2 zusammengestellt.

### Vergleichsbeispiel 2

Es wurde ein Laminat aus PET-Folie und PE Folie hergestellt. Das Laminat war siegelfähig. Die Eigenschaften des Laminats sind in Tabelle 2 angegeben.

### Vergleichsbeispiel 3

Eine Monofolie aus PET wurde hergestellt. Die Schichtzusammenstellung war:
- 80 Gew.-%: Polyethylenterephthalat RT 49 (Hoechst AG) mit einem SV-Wert von 800
- 20 Gew.-%: Masterbatch aus 99,0 Gew.-% Polyethylenterephthalat und 1,0 Gew.-% SiO₂ (Sylobloc 44 H), das zu 50 % eine mittlere Teilchengröße von 2,5 µm und zu 50 % eine mittlere Teilchengröße von 1,0 µm hat

Die Folie war nicht siegelfähig. Die Folieneigenschaften sind in Tabelle 1 angegeben.

### Vergleichsbeispiel 4

Eine Monofolie aus PEN wurde hergestellt. Die Schichtzusammenstellung war:
- 80 Gew.-%: Polyethylen-2,6-naphthalat Polyclear N 100 Prepolymer (Hoechst AG) mit einem SV-Wert von 1000
- 20 Gew.-%: Masterbatch aus 99,0 Gew.-% Polyethylen-2,6-naphthalat und 1,0 Gew.-% SiO₂ (Sylobloc 44 H), das zu 50 % eine mittlere Teilchengröße von 2,5 µm und zu 50 % eine mittlere Teilchengröße von 1,0 µm hat

Die Folie war nicht siegelfähig. Die Folieneigenschaften sind in Tabelle 1 angegeben.

**Tabelle 1**

| **Beispiel** | **Ethylen-2,6-napthalat-Einheiten in der Deckschicht (Gew.-%)** | **Ethylenterephthalat-Einheiten in der Deckschicht (Gew.-%)** | **Ethylenisophthalat-Einheiten in der Deckschicht (Gew.-%)** | **T_{g}1 °C** | **T_{g}2 °C** | **Siegelfähigkeit** |
|---|---|---|---|---|---|---|
| Beispiel 4 | 50 | 50 | 0 | 93 | 85 | ja |
| Beispiel 5 | 70 | 30 | 0 | 97 | 82,5 | ja |
| Beispiel 6 | 10 | 90 | 0 | 100 | 88 | ja |
| Vergleichsbeispiel 1 | 0 | 82 | 18 | 81 | 77 | ja |
| Vergleichs-beispiel 3 | 0 | 100 | 0 | 106 | 80 | nein |
| Vergleichs-beispiel 4 | 100 | 0 | 0 | ca. 130^{*} | 118 | nein |

**Tabelle 2**

| **Beispiel** | **Folien-dicke** | **Siegelschicht-dicke** | **Folien-aufbau** | **Mindestsiegel-temperatur** | | **Siegelnahtfestigkeit** | | **Glanz (60° Meßwinkel)** | | **Trübung** | **Produktions-sicherheit und Verarbeitbarkeit** | **Herstell-kosten** |
|---|---|---|---|---|---|---|---|---|---|---|---|---|
| | | | | **A/A** | **A/C** | **A/A** | **A/C** | **A-Seite** | **C-Seite** | | | |
| | µm | µm | | °C | | N/15mm | | | | % | | |
| Beispiel 4 | 12 | 1,2 | ABA | 110 | 110 | 2,5 | 2,5 | 175 | 175 | 2,5 | ++ | ++ |
| Beispiel 7 | 12 | 1,2 | ABA | 108 | 108 | 2,7 | 2,7 | 174 | 175 | 2,6 | ++ | ++ |
| Beispiel 8 | 12 | 1,2 | ABA | 107 | 108 | 2,9 | 2,8 | 176 | 175 | 2,5 | ++ | ++ |
| Beispiel 9 | 19 | 2,0 | ABA | 108 | 108 | 3,7 | 3,8 | 172 | 175 | 2,8 | ++ | ++ |
| Beispiel 10 | 12 | 2,0 | ABC | 110 | 125 | 2,5 | 2,0 | 175 | 178 | 1,4 | ++ | ++ |
| Vergleichs-beispiel 1 | 12 | 1,2 | AB | 120 | 129 | 2,0 | 2,0 | 145 | 160 | 3,0 | - | + |
| Vergleichs-beispiel 2 | 24 | 12 | AB | 100 | | 3,5 | | 120 | 150 | 6,5 | - | - |

| | | | | | | | | | | | | |
|---|---|---|---|---|---|---|---|---|---|---|---|---|
| Zeichenerklarung bei Verarbeitungssicherheit und Herstellkosten: ++: keine Klebeneigung an Walzen, keine Blockprobleme bei der Verarbeitung auf Verpackungsmaschinen; geringe Herstellkosten +: mittlere Herstellkosten -: Klebeneigung an Walzen, Blockprobleme bei der Verarbeitung auf Verpackungsmaschinen; hohe Herstellkosten Glasübergang Tg1 nur sehr schwer erkennbar, da sehr klein | | | | | | | | | | | | |

## Patentansprüche

1. Coextrudierte, siegelfähige, biaxial orientierte Polyesterfolie mit mindestens einer Polyester-Basisschicht, die zu mindestens 90 Gew.-% aus Polyethylenterephthalat (PET) besteht, und mindestens einer siegelfähigen Deckschicht, **dadurch gekennzeichnet, daß** diese siegelfähige Deckschicht ein Copolymer enthält, welches 5 bis 95 Gew.-% Ethylen-2,6-naphthalat-Einheiten enthält.

2. Polyesterfolie nach Anspruch 1, **dadurch gekennzeichnet, daß** die siegelfähige Deckschicht/en 10 bis 90 Gew.-% Polyethylen-2,6-naphthalat-Copolymeres enthält.

3. Coextrudierte siegelfähige Polyesterfolie mit mindestens einer Polyester-Basisschicht und mindestens einer siegelfähigen Deckschicht, **dadurch gekennzeichnet, daß** das Polymer der siegelfähigen Deckschicht eine Glasübergangstemperatur aufweist, die gleich oder höher ist als die Glasübergangstemperatur des Polyesters der Basisschicht.

4. Polyesterfolie nach einem oder mehreren der Ansprüche 1 bis 3, **dadurch gekennzeichnet, daß** das Polymer der siegelfähigen Deckschicht eine Glasübergangstemperatur aufweist, die mindestens 2 °C höher, vorzugsweise mindestens 5 °C höher ist als die Glasübergangstemperatur des Polyesters der Basisschicht ist.

5. Polyesterfolie nach einem oder mehreren der Ansprüche 1 bis 4, **dadurch gekennzeichnet, daß** sie eine Siegelanspringtemperatur von kleiner als 120 °C, vorzugsweise kleiner als 116 °C aufweist.

6. Polyesterfolie nach einem oder mehreren der Ansprüche 1 bis 5, **dadurch gekennzeichnet, daß** auf beiden Seiten der Basisschicht eine siegelfähige Deckschicht angeordnet ist.

7. Polyesterfolie nach einem oder mehreren der Ansprüche 1 bis 6, **dadurch gekennzeichnet, daß** die siegelfähige(n) Schicht(en) eine Dicke von 0,2 bis 5 µm aufweist/en.

8. Polyesterfolie nach einem oder mehreren der Ansprüche 1 bis 7, **dadurch gekennzeichnet, daß** sich auf einer Seite der Basisschicht eine nicht siegelfähige Deckschicht befindet.

9. Polyesterfolie nach einem oder mehreren der Ansprüche 1 bis 8, **dadurch gekennzeichnet, daß** das Copolymer der siegelfähigen Deckschicht Ethylenterephthalat-Einheiten enthält.

10. Polyesterfolie nach einem oder mehreren der Ansprüche 1 bis 9, **dadurch gekennzeichnet, daß** das Copolymere der siegelfähigen Deckschicht überwiegend aus Ethylen-2,6-naphthalat-Einheiten und Ethylenterephthalat-Einheiten besteht.

11. Polyesterfolie nach Anspruch 10, **dadurch gekennzeichnet, daß** das Gewichtsverhältnis von Ethylen-2,6-naphthalat-Einheiten zu Ethylenterephthalat-Einheiten 5 : 95 bis 95 : 5 beträgt.

12. Polyesterfolie nach einem oder mehreren der Ansprüche 1 bis 11, **dadurch gekennzeichnet, daß** sie In-Line beschichtet ist.

13. Polyesterfolie nach einem oder mehreren der Ansprüche 1 bis 12, **dadurch gekennzeichnet, daß** sie coronabehandelt ist.

14. Polyesterfolie nach einem oder mehreren der Ansprüche 1 bis 13, **dadurch gekennzeichnet, daß** sie metallisiert ist.

15. Polyesterfolie nach einem oder mehreren der Ansprüche 1 bis 14, **dadurch gekennzeichnet, daß** sie bedruckt ist.

16. Verfahren zur Herstellung einer siegelfähigen Polyesterfolie gemäß Anspruch 1, bei dem mindestens ein Polyethyle-2,6-naphthalat enthaltendes Copolymer und ein Polyester aus einer Breitschlitzdüse auf eine Kühlwalze coextrudiert werden, dort abgekühlt werden und der so erhaltene Vorfilm anschließend monoaxial oder biaxial orientiert wird, hitzefixiert und schließlich aufgewickelt wird.

17. Verfahren nach Anspruch 16, **dadurch gekennzeichnet, daß** das Copolymer in dem Extruder, welcher das Copolymer verdichtet, verflüssigt und der Breitschlitzdüse zuführt, durch Uumesterung hergestellt wird.

18. Verwendung einer Folie nach Anspruch 1 als Verpackungsfolie.

19. Verwendung einer Folie nach Anspruch 1 für die Herstellung von geprägten Folien, z.B. für holographische Anwendungen.

## Claims

1. A coextruded heat-sealable, biaxially oriented polyester film having at least one polyester base layer, which is composed of at least 90% by weight of polyethylene terephthalate (PET), and having at least one heat-sealable outer layer, wherein this heat-sealable outer layer comprises a copolymer which contains from 5 to 95 % by weight of ethylene 2,6-naphthalate units.

2. A polyester film as claimed in claim 1, wherein the heat-sealable outer layer(s) contain(s) from 10 to 90 % by weight of polyethylene 2,6-naphthalate copolymer.

3. A coextruded heat-sealable polyester film having at least one polyester base layer and at least one heat-sealable outer layer, wherein the polymer of the heat-sealable outer layer has a glass transition temperature which is the same as or higher than the glass transition temperature of the polyester of the base layer.

4. A polyester film as claimed in one or more of claims 1 to 3, wherein the polymer of the heat-sealable outer layer has a glass transition temperature which is at least 2 °C higher, preferably at least 5 °C higher, than the glass transition temperature of the polyester of the base layer.

5. A polyester film as claimed in one or more of claims 1 to 4, wherein the film has a sealing initiation temperature of below 120 °C, preferably below 116 °C.

6. A polyester film as claimed in one or more of claims 1 to 5, wherein a heat-sealable outer layer is arranged on both sides of the base layer.

7. A polyester film as claimed in one or more of claims 1 to 6, wherein the heat-sealable layer(s) has/have a thickness of from 0.2 to 5 µm.

8. A polyester film as claimed in one or more of claims 1 to 7, wherein a non-heat-sealable outer layer is located on one side of the base layer.

9. A polyester film as claimed in one or more of claims 1 to 8, wherein the copolymer of the heat-sealable outer layer contains ethylene terephthalate units.

10. A polyester film as claimed in one or more of claims 1 to 9, wherein the copolymer of the heat-sealable outer layer comprises predominantly ethylene 2,6-naphthalate units and ethylene terephthalate units.

11. A polyester film as claimed in claim 10, wherein the weight ratio of ethylene 2,6-naphthalate units to ethylene terephthalate units is from 5:95 to 95:5.

12. A polyester film as claimed in one or more of claims 1 to 11, wherein the film has been coated in-line.

13. A polyester film as claimed in one or more of claims 1 to 12, wherein the film has been corona-treated.

14. A polyester film as claimed in one or more of claims 1 to 13, wherein the film has been metalized.

15. A polyester film as claimed in one or more of claims 1 to 14, wherein the film has been printed.

16. A process for producing a heat-sealable polyester film as claimed in claim 1, which comprises coextruding at least one copolymer containing polyethylene 2,6-naphthalate and a polyester through a flat film die onto a chill roll, where they are cooled, and then monoaxially or biaxially orienting the resultant semifinished film, after which the film is heat-set and finally wound up.

17. The process as claimed in claim 16, wherein the copolymer is prepared by transesterification in the extruder which compresses and plasticizes the copolymer and feeds it to the flat film die.

18. The use of a film as claimed in claim 1, as packaging film.

19. The use of a film as claimed in claim 1 for producing embossed films, e.g. for holographic applications.

## Revendications

1. Feuille de polyester coextrudée, scellable et orientée biaxialement, comprenant au moins une couche de base de polyester, qui est constituée à hauteur d'au moins 90 % en poids de poly(téréphtalate d'éthylène) (PET), et au moins une couche de recouvrement scellable, **caractérisée en ce que** cette couche de recouvrement scellable contient un copolymère contenant 5 à 95 % en poids d'unités 2,6-naphtalate d'éthylène.

2. Feuille de polyester selon la revendication 1, **caractérisée en ce que** la ou les couches de recouvrement scellables contient ou contiennent 10 à 90 % en poids d'un copolymère de poly(2,6-naphtalate d'éthylène).

3. Feuille de polyester coextrudée scellable avec au moins une couche de base de polyester et au moins une couche de recouvrement scellable, **caractérisée en ce que** le polymère de la couche de recouvrement scellable présente une température de transition vitreuse qui est supérieure ou égale à la température de transition vitreuse du polyester de la couche de base.

4. Feuille de polyester selon une ou plusieurs des revendications 1 à 3, **caractérisée en ce que** le polymère de la couche de recouvrement scellable présente une température de transition vitreuse qui est supérieure d'au moins 2 °C, de préférence d'au moins 5 °C, à la température de transition vitreuse du polyester de la couche de base.

5. Feuille de polyester selon une ou plusieurs des revendications 1 à 4, **caractérisée en ce qu'**elle présente une température d'activation du scellage inférieure à 120 °C, de préférence inférieure à 116 °C.

6. Feuille de polyester selon une ou plusieurs des revendications 1 à 5, **caractérisée en ce qu'**une couche de recouvrement scellable est aménagée sur les deux faces de la couche de base.

7. Feuille de polyester selon une ou plusieurs des revendications 1 à 6, **caractérisée en ce que** la ou les couches scellables présente (nt) une épaisseur de 0,2 à 5 µm.

8. Feuille de polyester selon une ou plusieurs des revendications 1 à 7, **caractérisée en ce qu'**une couche de recouvrement non scellable se trouve sur une face de la couche de base.

9. Feuille de polyester selon une ou plusieurs des revendications 1 à 8, **caractérisée en ce que** le copolymère de la couche de recouvrement scellable contient des unités téréphtalate d'éthylène.

10. Feuille de polyester selon une ou plusieurs des revendications 1 à 9, **caractérisée en ce que** le copolymère de la couche de recouvrement scellable est constitué principalement d'unités 2,6-naphtalate d'éthylène et d'unités téréphtalate d'éthylène.

11. Feuille de polyester selon la revendication 10, **caractérisée en ce que** le rapport pondéral des unités 2,6-naphtalate d'éthylène aux unités téréphtalate d'éthylène est de 5:95 à 95:5.

12. Feuille de polyester selon une ou plusieurs des revendications 1 à 11, **caractérisée en ce qu'**elle est revêtue en ligne.

13. Feuille de polyester selon une ou plusieurs des revendications 1 à 12, **caractérisée en ce qu'**elle est soumise à un traitement corona.

14. Feuille de polyester selon une ou plusieurs des revendications 1 à 13, **caractérisée en ce qu'**elle est métallisée.

15. Feuille de polyester selon une ou plusieurs des revendications 1 à 14, **caractérisée en ce qu'**elle est imprimée.

16. Procédé de fabrication d'une feuille de polyester scellable selon la revendication 1, dans lequel au moins un copolymère contenant du poly(2,6-naphtalate d'éthylène) et un polyester sont co-extrudés d'une filière plate sur un cylindre de refroidissement, ils y sont refroidis et le pré-film ainsi obtenu est ensuite orienté monoaxialement ou biaxialement, soumis à une opération de fixation à chaud et enfin enroulé.

17. Procédé selon la revendication 16, **caractérisé en ce que** le copolymère est fabriqué par transestérification dans l'extrudeuse, qui comprime le copolymère, le liquéfie et l'achemine à la filière plate.

18. Utilisation d'une feuille selon la revendication 1 comme feuille d'emballage.

19. Utilisation d'une feuille selon la revendication 1 pour la fabrication de feuilles gaufrées, par exemple pour des applications holographiques.
